# EUROPÄISCHE PATENTANMELDUNG

(11) **EP 4 258 412 A1**
(43) Veröffentlichungstag der Anmeldung: **11.10.2023**
(21) Anmeldenummer: 22167050.8
(22) Anmeldetag: 07.04.2022
(51) Int. Cl.: H01M 10/44

(54) **ENTLADEVORRICHTUNG FÜR EIN AKKUPACK**

(71) Anmelder: Hilti Aktiengesellschaft, 9494 Schaan (LI)
(72) Erfinder: Hauser, Klaus, 86830 Schwabmünchen (DE)
(74) Vertreter: Hilti Aktiengesellschaft Corporate Intellectual Property

(57) **Zusammenfassung**

Entladevorrichtung für ein Akkupack, wobei die Entladevorrichtung als akkuexterne Entladebrücke ausgebildet ist, die einen elektrisch leitfähigen Kunststoff aufweist. Die Entladebrücke kann vollständig aus dem leitfähigen Kunststoff bestehen.

## Beschreibung

### Entladevorrichtung für ein Akkupack

Die vorliegende Erfindung betrifft eine Entladevorrichtung für ein Akkupack, insbesondere für ein Akkupack einer elektrischen Handwerkzeugmaschine.

Entladevorrichtungen, insbesondere in Form von akkuintegrierten Entladeschaltungen, sind grundsätzlich aus dem Stand der Technik bekannt. So kann beispielsweise eine im Akkupack integrierte Überwachungselektronik zwecks Entladung des Akkupacks als Entladeschaltung betrieben werden.

Es ist Aufgabe der vorliegenden Erfindung eine Entladevorrichtung bereitzustellen, die ein einfaches und sicheres Entladen eines Akkupack begünstigt.

Die Aufgabe wird dadurch gelöst, dass die Entladevorrichtung als akkuexterne Entladebrücke ausgebildet ist, die einen elektrisch leitfähigen Kunststoff aufweist. Es hat sich als vorteilhaft herausgestellt, wenn die Entladebrücke eine vom Akkupack verschiedene Komponente ist.

Die Erfindung schließt die Erkenntnis ein, dass es für den Transport oder die Entsorgung von Akkupacks von Vorteil ist, wenn die Zellen des Akkupacks möglichst wenig Energieinhalt haben. Dies reduziert das Risiko von gefährlichen Zuständen wie starke Erwärmung, Bränden oder Explosionen. Nachteilig bei der Entladung des Akkupacks über eine integrierte Überwachungselektronik ist der (beim regulären Betrieb an sich wünschenswerte) geringe Stromverbrauch der Überwachungselektronik und die damit verbundene lange Entladezeit, bis der sichere Zustand erreicht wird.

Es hat sich als vorteilhaft herausgestellt, wenn die Entladebrücke vollständig aus dem elektrisch leitfähigen Kunststoff besteht. Somit ergibt sich ein einfacher Aufbau der Entladevorrichtung mit dem zusätzlichen Vorteil eine sortenreinen Entsorgbarkeit.

Aus dem Stand der Technik sind verschiedene elektrisch leitfähigen Kunststoffe bekannt, die sich zur Verwendung für die erfindungsgemäße Entladevorrichtung eignen. So kann durch Einlagerung von Ruß in Polypropylen typischerweise ein spezifischer Widerstand zwischen 1E+2 und 10E+4 [Ω·cm] erreicht werden. Als leitfähige Fülleinlagen sind weiterhin Graphit, Kohlenstoff-Nanoröhrchen und Graphen bekannt. Polyäthylen, welches mit 2000 ppm Aluminium dotierten Zinkoxid versetzt wird, weist typischerweise einen spezifischen elektrischen Widerstand von etwa 60 [Ω·cm] auf.

In einer besonders bevorzugten Ausgestaltung weist die Entladebrücke zwei Anschlusskontakte zum elektrischen Anschließen der Entladebrücke an korrespondierende Polkontakte des Akkupacks auf. Die zwei Anschlusskontakte können mit den korrespondierende Polkontakte des Akkupacks im Sinne eines Steckverbinders zusammenwirken. Die zwei Anschlusskontakte können demnach vorteilhafterweise dem mechanischen Anschließen der Entladebrücke an die korrespondierenden Polkontakte des Akkupacks dienen.

Es ist darüber hinaus auch möglich, dass die Entladebrücke entsprechend einer weiteren vorteilhaften Ausgestaltung mehr als zwei Anschlusskontakte aufweist. Es ist insbesondere dabei möglich, dass die Endladebrücke vier Anschlusskontakte aufweist, wobei jeweils zwei Anschlusskontakte für zwei Plus-Polkontakte eines Akkupacks und zwei Anschlusskontakte für zwei Minus-Polkontakte eines Akkupacks vorgesehen sind. Die zusätzlichen bzw. redundanten Anschlusskontakte dienen dabei einer Absicherung für den Fall, dass ein Anschlusskontakt defekt sein sollte.

Es hat sich als vorteilhaft herausgestellt, wenn ein Entladevorgang mittels der Entladebrücke ausschließlich mittels eines ohmschen Widerstands erfolgt. Mit anderen Worten: Der elektrisch leitfähige Kunststoff selbst ist vorteilhafterweise der Entladewiderstand der Entladevorrichtung. In einer besonders bevorzugten Ausgestaltung ist zwischen den zwei Anschlusskontakten ein ohmscher Widerstand (Entladewiderstand) zwischen 11 Ohm und 220 Ohm realisiert. Ein Entladewiderstand von 220 Ohm würde (gemäß der Formel I=U/R) bei einer vorteilhaften Spannung des Akkupacks von 22 Volt zu einem Entladestrom von 0,1 Ampere führen. In diesem Fall ergibt sich eine Verlustleistung über der Entladebrücke (gemäß der Formel P=U*I) von 2,2 Watt. Ein Entladewiderstand von 11 Ohm würde (gemäß der Formel I=U/R) bei einer vorteilhaften Spannung des Akkupacks von 22 Volt zu einem Entladestrom von 2 Ampere führen. In diesem Fall ergibt sich eine Verlustleistung über der Ladebrücke (gemäß der Formel P=U*I) von 44 Watt. Vorteilhafte Entladeströme für ein Akkupack liegen im Bereich von 0,1 Ampere bis 2,0 Ampere. Je nach Anwendungsfall kann eine Verlustleistung über der Ladebrücke zwischen 1 Watt und 100 Watt realisiert sein. Vorteilhafterweise kann ein spezifischer Widerstand des elektrisch leitfähigen Kunststoffs im Bereich von 1 bis 100 [Ω·cm] [Ω·cm²/cm] liegen.

Der ohmsche Widerstand kann dabei als Bauteil mit einem Kohleschicht- oder Metallschichtwiderstand aufgebaut sein.

Dem Fachmann ist klar, dass durch eine geeignete Geometrie der Entladebrücke der Entladewiderstand der Entladebrücke dimensioniert werden kann. Der ohmsche Widerstand (Entladewiderstand) ergibt sich durch die Formel R = (ρ* L) / A, wobei p der bereits erwähnte spezifische Widerstand des elektrisch leitfähigen Kunststoffs, L die Länge des Stromwegs innerhalb der Entladebrücke und A der Querschnitt des stromführenden Bereichs der Entladebrücke ist.

In einer besonders bevorzugten Ausgestaltung wird die Entladebrücke durch Spritzgießen erhalten. Falls die Entladebrücke vollständig aus dem elektrisch leitfähigen Kunststoff besteht, kann die als gesamte Komponente einteilig aus diesem Kunststoff abgespritzt werden. Alternativ, falls die Anschlusskontakte der Entladebrücke aus einem elektrisch leitfähigen Metall bestehen oder ein solches aufweisen, können die Anschlusskontakte mit dem elektrisch leitfähigen Kunststoff umspritzt werden. Die Anschlusskontakte können somit wenigstens teilweise aus Metall und/oder einem leitfähigen Kunststoff bestehen.

In einer weiteren bevorzugten Ausgestaltung weist die Entladebrücke ein oder mehrere Kühlrippen auf. Derart kann eine Wärmabgabe an die Umwelt im Zuge des Entladungsvorgangs verbessert werden. Vorteilhafterweise können die Kühlrippen im Zuge des Spritzgießvorgang beim Herstellen der Entladebrücke erhalten werden.

In einer weiteren bevorzugten Ausgestaltung kann die Entladebrücke, zwecks Änderung ihres ohmschen Widerstands, kaskadierbar ausgebildet sein. So kann die Entladebrücke zwei Aufnahmekontakte aufweisen, die vorteilhafterweise mit den zwei Anschlusskontakten korrespondieren. Derart können zwei Entladebrücken, im Sinne einer Parallelschaltung von Widerständen, zur Vergrößerung des Entladestrom miteinander verschalten werden.

Die Aufgabe wird ebenfalls gelöst durch die Verwendung einer Entladevorrichtung der vorbeschriebenen Art zum Entladen eines Akkupacks einer Handwerkzeugmaschine.

Die Aufgabe wird ebenfalls gelöst durch ein Entladeset mit wenigstens zwei Entladebrücken, wobei ein ohmscher Widerstand, der zwischen zwei Anschlusskontakten einer ersten der zwei Entladevorrichtungen realisiert ist, verschieden ist von einem ohmschen Widerstand, der zwischen zwei Anschlusskontakten einer zweiten der zwei Entladevorrichtungen realisiert ist. Auf diese Art und Weise kann ein Benutzer einen gewünschten Entladestrom einfach durch Auswahl einer geeigneten Entladebrücke einstellen.

Weitere Vorteile ergeben sich aus der folgenden Figurenbeschreibung. In der Figur ist ein besonders bevorzugtes Ausführungsbeispiel der vorliegenden Erfindung dargestellt. Die

Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:

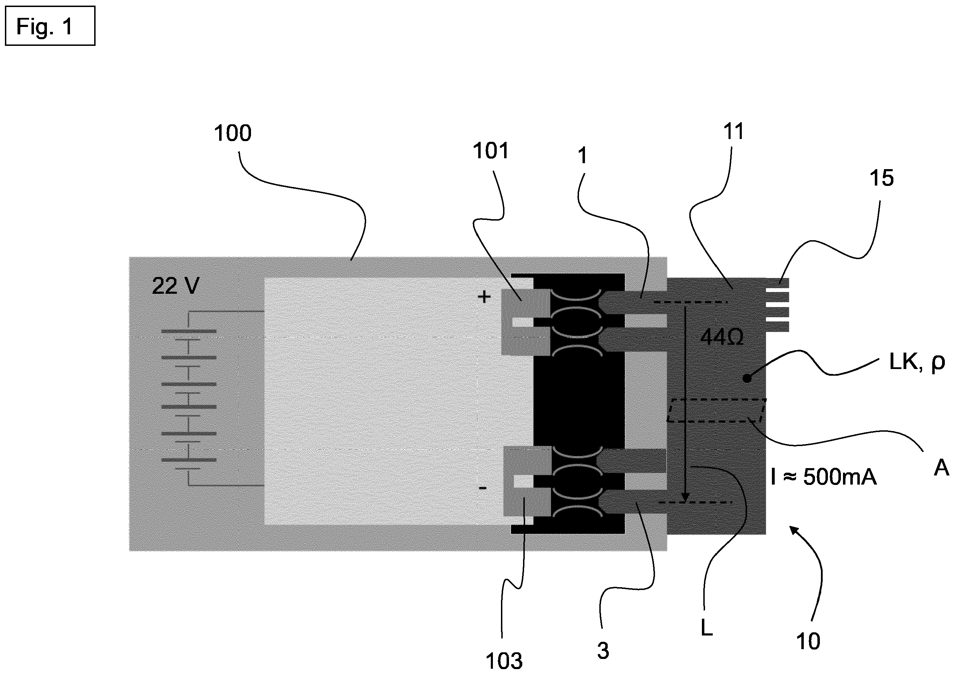

- Figur 1: ein bevorzugtes Ausführungsbeispiel einer Entladevorrichtung für ein Akkupack.

### Ausführungsbeispiel:

Fig. 1 zeigt - in stark schematisierter Darstellung - eine bevorzugtes Ausführungsbeispiel einer Entladevorrichtung 10 für ein Akkupack 100. Der Akkupack 100 dient zur Versorgung einer hier nicht dargestellten elektrischen Handwerkzeugmaschine und weist beispielhaft eine Spannung von 22 Volt auf. Die Entladevorrichtung 10 ist als akkuexterne Entladebrücke 11 ausgebildet, wobei die Entladebrücke 11 vorliegend mittels Spritzgießens hergestellt wurde und vollständig aus einem leitfähigen Kunststoff LK besteht. Somit kann die Entladebrücke 11 sortenrein entsorgt werden. Die Entladebrücke 11 ist eine vom Akkupack 100 verschiedene Komponente, die bedarfsweise an den Akkupack 100 angesteckt werden kann.

Die Entladebrücke 11 weist dazu zwei Anschlusskontakte 1, 3 auf, die vorliegend doppelstiftartig ausgebildet sind, und zum elektrischen und mechanischen Anschließen der Entladebrücke 11 an verschiedenpolige Polkontakte 101, 103 des Akkupacks 100 dienen. Die vollständig aus dem elektrisch leitfähigen Kunststoff LK bestehende Entladebrücke 11 bildet einen ohmschen Entladewiderstand zum Entladen des Akkupacks 100. Dabei ist zwischen den zwei Anschlusskontakten 1, 3 beispielhaft ein Widerstand von 44 Ohm realisiert, was gemäß der Formel I=U/R bei einer Spannung des Akkupacks 100 von 22 Volt zu einem Entladestrom I von 0,5 Ampere führt.

Der ohmsche Entladewiderstand von 44 Ohm wird durch eine geeignete Geometrie der Entladebrücke 11 dimensioniert. Dabei ergibt sich der Entladewiderstand durch die Formel R = (ρ* L) / A, wobei p der spezifische Widerstand des elektrisch leitfähigen Kunststoffs LK, L die Länge des Stromwegs innerhalb der Entladebrücke 11 und A der Querschnitt des stromführenden Bereichs der Entladebrücke 11 ist.

Ein Entladevorgang des Akkupacks 100 mittels der Entladebrücke 11 erfolgt ausschließlich mittels des ohmschen Widerstands. Damit könnte der Akkupack 100, der beispielhaft eine Kapazität von 12 Amperestunden aufweist, innerhalb eines Tages vollständig entladen werden.

Durch den Entladestrom I von 0,5 Ampere ergibt sich gemäß der Formel P=U*I eine elektrische Verlustleistung über der Ladebrücke von 11 Watt, die selbstverständlich zu einer Erwärmung der Entladebrücke 11 führt. Um eine gute Ableitung der entstehenden Wärme zu erzielen weist die Entladebrücke 11, zur Vergrößerung ihrer Oberfläche, mehrere Kühlrippen 15 auf, die im vorliegend dargestellten Ausführungsbeispiel mittels Spritzgießens hergestellt wurden.

Die in Fig. 1 dargestellte Entladebrücke 11 begünstigt ein besonders einfaches, sicheres und schnelles Entladen des Akkupacks 100.

### Bezuaszeichenliste

- 1, 3: Anschlusskontakte
- 10: Entladevorrichtung
- 11: Entladebrücke
- 15: Kühlrippen
- 100: Akkupack
- 101, 103: Polkontakte

- A: Querschnitt
- I: Entladestrom
- L: Länge des Stromwegs
- LK: elektrisch leitfähiger Kunststoff
- R: ohmscher Widerstand
- U: Spannung
- P: elektrische Verlustleistung
- p: spezifischer Widerstand

## Patentansprüche

1. Entladevorrichtung (10) für ein Akkupack (100),
**dadurch gekennzeichnet, dass** die Entladevorrichtung (10) als akkuexterne Entladebrücke (11) ausgebildet ist, die einen elektrisch leitfähigen Kunststoff (LK) aufweist.

2. Entladevorrichtung (10) nach Anspruch 1,
**dadurch gekennzeichnet, dass** die Entladebrücke (11) aus dem leitfähigen Kunststoff (LK) besteht.

3. Entladevorrichtung (10) nach Anspruch 1 oder 2,
**dadurch gekennzeichnet, dass** die Entladebrücke (11) zwei Anschlusskontakte (1, 3) zum elektrischen Anschließen der Entladebrücke an korrespondierende Polkontakte (101, 103) des Akkupacks (100) aufweist.

4. Entladevorrichtung (10) nach Anspruch 3,
**dadurch gekennzeichnet, dass** die Anschlusskontakte (1, 3) wenigstens teilweise aus Metall und/oder einem leitfähigen Kunststoff bestehen.

5. Entladevorrichtung (10) nach Anspruch 3 oder 4,
**dadurch gekennzeichnet, dass** zwischen den zwei Anschlusskontakten (1, 3) ein ohmscher Widerstand zwischen 11 Ohm und 220 Ohm realisiert ist.

6. Entladevorrichtung (10) nach einem der vorangehenden Ansprüche,
**dadurch gekennzeichnet, dass** ein Entladevorgang mittels der Entladebrücke (11) ausschließlich mittels eines ohmschen Widerstands erfolgt.

7. Entladevorrichtung (10) nach einem der vorangehenden Ansprüche,
**dadurch gekennzeichnet, dass** die Entladebrücke (11) durch Spritzgießen erhalten wird.

8. Entladevorrichtung (10) nach einem der vorangehenden Ansprüche,
**dadurch gekennzeichnet, dass** die Entladebrücke (11) Kühlrippen (15) aufweist.

9. Entladevorrichtung (10) nach einem der vorangehenden Ansprüche,
**dadurch gekennzeichnet, dass** die Entladebrücke (11) eine vom Akkupack (100) verschiedene Komponente ist.

10. Entladevorrichtung (10) nach einem der vorangehenden Ansprüche,
**dadurch gekennzeichnet, dass** die Entladebrücke (11), zwecks Änderung ihres ohmschen Widerstands, kaskadierbar ausgebildet ist.

11. Entladeset mit wenigstens zwei Entladebrücken (11) nach einem der Ansprüche 3 bis 9, wobei ein ohmscher Widerstand, der zwischen den zwei Anschlusskontakten (1, 3) einer ersten (11) der zwei Entladevorrichtungen realisiert ist, verschieden ist von einem ohmschen Widerstand, der zwischen den zwei Anschlusskontakten einer zweiten der zwei Entladevorrichtungen realisiert ist.

12. Verwendung einer Entladevorrichtung (10) nach einem der Ansprüche 1 bis 10 zum Entladen eines Akkupacks (100) einer elektrischen Handwerkzeugmaschine.
